# EUROPÄISCHE PATENTSCHRIFT

(11) **EP 2 162 645 B1**
(45) Veröffentlichungstag und Bekanntmachung des Hinweises auf die Patenterteilung: **17.08.2011**
(21) Anmeldenummer: 08758664.0
(22) Anmeldetag: 21.05.2008
(51) Int. Cl.: F16H 57/04, F28D 7/06

(54) **GETRIEBE MIT EINEM WÄRMETAUSCHMODUL UND GETRIEBEBAUREIHE**
TRANSMISSION HAVING A HEAT EXCHANGE MODULE AND TRANSMISSION LINE
REDUCTEUR COMPRENANT UN MODULE ECHANGEUR THERMIQUE ET SERIE DE REDUCTEUR

(30) Priorität: 24.05.2007 DE 102007024512
(43) Veröffentlichungstag der Anmeldung: 17.03.2010
(73) Patentinhaber: SEW-EURODRIVE GmbH & Co. KG, 76646 Bruchsal (DE)
(72) Erfinder: SAAR, Steffen, 67376 Harthausen (DE); BARTON, Peter, 75015 Bretten (DE); MÜLLER, Manfred, 76698 Ubstadt-Weiher (DE)
(86) Internationale Anmeldenummer: PCT/EP2008/004057
(87) Internationale Veröffentlichungsnummer: WO 2008/141811

(56) Entgegenhaltungen:
- EP-A- 0 013 621
- DE-A1- 2 002 096
- DE-A1- 4 010 333
- DE-A1- 10 315 684
- JP-A- 61 110 878
- JP-A- 2003 074 789
- NL-A- 6 800 945

## Beschreibung

Die Erfindung betrifft ein Getriebe mit einem Wärmetauschmodul, wobei das Wärmetauschmodul mehrere Rohre umfasst, die in Gebrauchsstellung im Ölsumpf des Getriebes angeordnet sind, und wobei jedes der mehreren Rohre an beiden Enden durch das Gehäuse des Getriebes geführt und an einen Kühlkreislauf angeschlossen ist, und eine Getriebebaureihe.

Derartige Getriebe sind bekannt aus der US 4 633 938 A, bei der bei einem Getriebekühlsystem ein Gehäuse Paare von Buchsen in Paaren von entsprechend ausgerichteten Öffnungen aufnimmt, wobei eine Mehrzahl von Wärmetauschrohren jeweils ein gerades Rohr und am Rohr angeordnete Lamellen hat und sich jedes gerade Rohr an jedem Ende durch jeweils eine Buchse eines zugehörigen Paars von Buchsen erstreckt.

US 4633 938 A wird als nächster Stand der Technik angesehen und offenbart die Merkmale des Oberbegriffs des Anspruchs 1.

Aus der DE 40 10 333 A1 ist eine Schmieröl-Kühlvorrichtung eines Leistungsübertragungssystems mit einem Gehäuse zur Aufnahme von wenigstens zwei Zahnrädern und von Schmieröl bekannt, das ein an dem Gehäuse befestigtes, mit einer Heiz- und einer Kühlsektion versehenes Wärmerohr und einen Ölbehälter umfasst, wobei die Heizsektion des Wärmerohrs durch eine oberhalb des Schmierölpegels liegende Anschlussöffnung des Ölbehälters hindurch in den Ölbehälter eingesetzt ist.

Aus der DE 81 23 917 U1 ist eine elektrische Schmierölheizung bekannt, bei der ein Heizstab und ein Temperaturfühler in einem Gehäuse angeordnet sind, das mit einer Flüssigkeit gefüllt ist, deren Siedetemperatur unter derjenigen Temperatur liegt, bei der das Schmieröl zu verkoken beginnt.

Aus der US 4 393 922 A ist eine Differentialgetriebe einer Fahrzeug-Antriebsachse bekannt, das ein Schmierstoff-Sammelrohr und ein Wärmerohr hat, dessen Wärme aufnehmender Teil einen kreisförmigen Querschnitt hat und sich in den Raum zur Schmierstoffaufnahme erstreckt.

Aus der CH 519 692 A ist ein Wärmetauscher für Wasser bekannt, bei dem eine Anzahl parallelgeschalteter Rohre, die an ihren Enden an einen Eintritt bzw. einen Austritt für eine Flüssigkeit angeschlossen und in einem Gehäuse untergebracht sind, welches für Wasser vorgesehen ist, wobei die Rohre zu einem langgestreckten Käfig mit relativ schmalen Spalten zwischen den einzelnen Rohren und in Längsrichtung ausgerichteten Leitplatten zusammengestellt sind und ein Eintritt für die zweite Flüssigkeit am Ende des Käfigs in diesen hineingeführt ist.

Aus der DE 660 474 A ist eine Befestigung von Rohren durch Spannringe bekannt, bei denen ein Bördel am offenen Rohrende zur Erhöhung der Haftkraft in eine Erweiterung eines Rohrloches eingewalzt ist.

Aus der DE 26 57 666 A1 ist ein mit korrosionhemmendem Kunststoff beschichteter Wärmetauschereinsatz, bestehend aus einem Rohrbündel, das in Bohrungen wenigstens einer stirnseitigen Bodenplatte eingeschweißt ist und das im Abstand von einander angeordnete durchbohrte Umlenkscheiben für einen Wärmetauscher durchsetzt, die auf Ankerstäben fixiert sind, wobei die Umlenkscheiben aus warmfesten Kunststoff bestehen und ihre Bohrungen mit gerundeten Kanten gegenüber den sie durchsetzenden Rohren ausgeführt sind, bekannt, bei dem die formschlüssige Verankerung der Umlenkscheiben an den Ankerstäben durch korrespondierende Ausnehmungen erfolgt.

Aus der US 2 687 784 A ist eine Schmierstoffkühlung für Getriebe bekannt, bei der eine Rohranordnung über ihre Länge von einem vergleichsweise großen Zahnrad geworfenen Schmierstoff aufnimmt und äußere Lamellen mit bordierten Oberflächen aufweist, die den so aufgenommenen Schmierstoff unterbrechen, aufbrechen und verteilen.

Aus der US 6 830 096 B1 ist ein Wärmerohr für eine Differential-Baugruppe bekannt, welches sich horizontal durch eine Achsschmierstoff und vertikal in der Differential-Baugruppe erstreckt und dann von einer inneren Umgebung zu einer äußeren Umgebung übergeht.

Aus der DE 103 15 684 A1 ist ein Getriebe mit einem Getriebegehäuse bekannt, wobei das Getriebegehäuse einen Bereich umfasst, in dem Zahnräder rotieren, und das Getriebe einen Wärmetauscher hat, der die in dem Getriebe erzeugte und an ein Getriebeschmiermittel übergebene Wärme aufnimmt und an ein Kühlmittel zum Abtransport der Wärme vom Getriebe weg abgibt, wobei in dem Getriebegehäuse außerhalb des Bereichs, in dem die Zahnräder rotieren, eine Vertiefung vorgesehen ist, die vom Getriebeschmiermittel durchströmt wird und in welcher der Wärmetauscher angeordnet ist.

Aus der DD 271 936 A1 ist eine Einrichtung zum Aufheizen einer Flüssigkeit in einem separatem oder in einem Aggregat integrierten Behälter bekannt, wobei ein oder mehrere in einer von einer Flüssigkeit teilweise oder vollständig umspülten, jedoch von der Flüssigkeit getrennten, Kammer Heizelemente sowie ein mit dieser Kammer verbundenes, in der aufzuheizenden Flüssigkeit geeignet verlegtes, Rohrsystem angeordnet sind, wobei Kammer und Rohrsystem mit einem Medium gefüllt sind.

Aus der JP 2003074789 A ist eine Anordnung zur Vorbeugung gegen Schmierölgefrierung bekannt, die eine Heizung, eine Temperaturerfassung und ein stromführendes Steuermittel hat, wobei das Steuermittel einen Strom für die Heizung beaufschlagt, sobald die Temperaturerfassung einen Temperaturwert erfasst, der nicht über einem festgelegten Wert liegt.

Aus der JP 58034296 A ist ein Schmieröl-Kühlgerät bekannt, bei dem ein zirkulierendes Wärmetauschmedium in einem Wärmeübertragungsrohr eingeschlossen ist und in einem Erwärmungsbereich in Dampf übergeht und in einem Wärmeabstrahlungsbereich kondensiert, wobei der Dampf durch den Dampfdruckunterschied zu Wärmeabstrahlungsbereich bewegt wird, und bei dem der Wärmeabstrahlungsbereich durch einen mittels Lüfter bewegten Luftstrom gekühlt wird.

Aus der US 3 029 661 ist ein Allzweck-Getriebe bekannt, bei dem eine Pumpe aus dem Ölsumpf über eine Rohrleitung an der Außenwand Ol an einen extern angebrachten Wärmetauscher pumpt zur Kühlung des Öls. Das gekühlte Öl fließt über ein weiteres Rohr zurück in den Ölsumpf.

Aus der DE 10 2004 022 863 A1 ist ein Getriebe und ein Baukasten von Getrieben bekannt, wobei das Getriebe einen Deckel und ein restliches Gehäuse hat, die dicht und lösbar miteinander verbunden sind und der Deckel eine nach außen gerichtete Kühlvorrichtung hat, und der Baukasten von Getrieben mindestens ein Getriebe mit zwei verschiedenen Deckeln umfasst. Die Deckel ist als eine erste Variante ohne Kühlfinger oder Kühlkörper, also flach, ausgeführt und in einer zweiten Variante mit an seiner Außenseite ausgebildeten Kühlfingern oder Kühlrippen, Ober die Wärme an ein umgebendes Kühlmedium, beispielsweise Luft oder bei Spezialausführung Wasser, ableitbar ist.

Aus der DE 2 002 096 A ist ein Wärmetauscher bekannt, der ein äußeres Gehäuse aus einem zylindrischen Mantel und zwei gewölbten Stirnwänden hat, wobei im Inneren des Gehäuses Rohre zu einem langgestreckten Käfig mit relativ schmalen Spalten zwischen den einzelnen Rohren zusammengestellt sind, wobei der Eintritt für eine zweite Flüssigkeit am einen Ende des Käfigs in diesen so eingeführt ist, dass seine Mündung in Längsrichtung des Käfigs zeigt, wobei sich Leitplatten längs der Rohre und längs der Strömungsrichtung erstrecken.

Der Erfindung liegt die Aufgabe zugrunde, den Schmierkreislauf in einer Getriebebaureihe weiterzubilden, wobei die Variabilität der Baureihe erhöht ist.

Erfindungsgemäß wird die Aufgabe bei dem Getriebe nach den in Anspruch 1 und bei der Getriebebaureihe nach den in Anspruch 14 angegebenen Merkmalen gelöst.

Wichtige Merkmale der Erfindung eines Getriebes mit einem Wärmetauschmodul sind in Anspruch 1 angegeben. Insbesondere ist vorgesehen, dass das Wärmetauschmodul mehrere Rohre umfasst, die in Gebrauchsstellung im Ölsumpf des Getriebes angeordnet sind, und dass jedes der mehreren Rohre an beiden Enden durch das Gehäuse des Getriebes geführt und an einen Kühlkreislauf angeschlossen ist, dass das Wärmetauschmodul einen Grundkörper aufweist, dass der Grundkörper ein Gewinde aufweist zum Einschrauben in eine Gehäuseöffnung des Getriebes, dass die Rohre bügelförmig ausgebildet sind, dass die Rohre mit beiden Enden in jeweils einer Bohrung in dem Grundkörper befestigt sind, dass die räumliche Ausdehnung der Rohre quer zu deren Längsrichtung durch den Durchmesser des Gewindes begrenzt und das Wärmetauschmodul durch die Gehäuseöffnung von außen einführbar ist, dass wenigstens zwei bügelförmige Rohre eine unterschiedliche Länge aufweisen, wobei jedes der zwei bügelförmigen Rohre eine Ebene aufspannt und sich die zwei Ebenen transversal, insbesondere unter einem von Null verschiedenen Winkel oder einem Winkel von wenigstens 5°, schneiden, und dass die bügelförmigen Rohre durch mindestens ein Distanzblech gesteckt sind. Ein bevorzugter Winkel, unter dem sich die Ebenen schneiden, liegt zwischen 10° und 45° und beträgt beispielsweise ungefähr, also bis auf Abweichungen von 10%, 15°. In der Gehäuseöffnung ist ein zu dem Gewinde passendes Gegengewinde ausgebildet, in welches das Wärmetauschmodul eingeschraubt ist.

Ein erfindungsgemäßes Getriebe erreicht insbesondere gegenüber der US 4 633 938 A und der US 4 393 922 A den Vorteil, dass das Wärmetauschmodul als kompakte Einheit entfernbar und/oder nachträglich zurüstbar ist. Durch die Verwendung von stabilisierenden Distanzblechen ist eine dünnere Ausführung der Rohre für das Kühlmedium ermöglicht, wodurch die Gehäuseöffnung mit kleinerem Durchmesser als nach dem Stand der Technik üblich ausführbar ist.

Ein erfindungsgemäßes Getriebe erreicht insbesondere gegenüber der DE 40 10 333 A1, der DE 81 23 917 U1 und der JP 58034296 A den Vorteil, dass das Wärmetauschmodul an einen externen Kühlkreislauf anschließbar ist. Dies wird ermöglicht durch die einschraubbare Grundplatte, welche die Enden der bügelförmigen Rohre aufnimmt.

Es hat sich herausgestellt, dass im Ölsumpf eines Getriebes keine längsgerichtete Leitplatte zur Führung von vorbeiströmendem Medium erforderlich ist, da die Strömung, hervorgerufen durch die eintauchenden Zahnräder, stark genug ist. Durch diese überraschende Erkenntnis sind stabilisierende Distanzbleche, die bei einem Wärmetauscher nach der CH 519 692 A funktionshindernd wären, vorsehbar mit dem Vorteil, dass das Wärmetauschmodul durch die Verwendung von stabilisierenden Distanzblechen eine kompaktere, robustere Einheit, ein Rohrbündel, bildet und die einzelnen Rohre somit nicht einzeln verbiegbar sind.

Die Erfindung erreicht insbesondere gegenüber der DE 26 57 666 A1 den Vorteil, dass ein robustes Wärmetauschmodul für bei einem Getriebe typischerweise auftretenden mechanischen und thermischen Belastungen bereitgestellt ist, und dass durch die sich kreuzende, also sich transversal schneidende, Anordnung der bügelförmigen Rohre eine verbesserte Platz- und Materialausnutzung gegeben ist.

Die Erfindung bietet weiter, insbesondere gegenüber der US 2 687 784 A, der US 6 830 096 B1 und der DD 271 936 A, den Vorteil, dass das Wärmetauschmodul durch die Ausbildung eines Gewindes an einem Grundkörper schnell und auch bei großen thermischen und mechanischen Belastungen dicht am Getriebe montierbar ist.

Die Erfindung bietet insbesondere gegenüber der DE 103 15 684 A1 den Vorteil, dass eine Montageanordnung für das Wärmetauschmodul ermöglicht ist, bei der die Rohre in einen Ölsumpf hineinragen, wobei das freie Ende der bügelförmigen Rohre nicht durch eine stabilisierende Kopfplatte und eine diese aufnehmende Gehäuseausnehmung die Ölströmung behindert. Dies wird insbesondere durch die erfindungsgemäßen Distanzbleche ermöglicht.

Die Erfindung bietet insbesondere gegenüber der JP 2003074789 A den Vorteil, dass die Rohre des Wärmetauschmoduls vom Ölsumpf durchströmt werden können und so eine vergrößerte Oberfläche für Wärmeaufnahme aus dem Ölsumpf bilden.

Gemäß einer Ausgestaltung der Erfindung kann vorgesehen sein, dass die bügelförmigen Rohre aus jeweils zwei entlang einer Längsachse parallel geführten Rohren gebildet sind, die an ihrem einen Ende jeweils paarweise durch ein bogenförmiges Rohrstück verbunden sind und/oder durch wenigstens zwei Distanzbleche gesteckt sind, insbesondere wobei je ein Distanzblech in jeder Abschnittshälfte der entlang der Längsachse parallel geführten Rohre angeordnet Ist und/oder je ein Distanzblech vom freien Ende des Wärmetauschers her im ersten und im zweiten Drittel der entlang der Längsachse parallel geführten Rohre angeordnet ist. Die Verbindung kann stoffschlüssig, formschlüssig und/oder kraftschlüssig oder gleitend ausgebildet sein. Von Vorteil ist dabei, dass im Endbereich des freien Endes wenigstens ein stabilisierendes Distanzblech angeordnet ist, und dass ein weiteres Distanzblech in der Mitte oder im anderen Endbereich die Stabilität erhöht. Es ist durch die Distanzbleche ein Rohrbündel geformt, bei dem die Gefahr der mechanischen Beschädigung eines einzelnen Rohres vermindert ist.

Gemäß einer Ausgestaltung der Erfindung kann vorgesehen sein, dass wenigstens zwei bügelförmige Rohre eine gleiche Länge aufweisen, wobei jedes der zwei bügelförmigen Rohre eine Ebene aufspannt und die zwei Ebenen parallel zueinander angeordnet sind. Somit ist eine Platz sparende Anordnung der Rohre gegeben, die gleichzeitig gute Durchströmungseigenschaften aufweist.

Gemäß einer Ausgestaltung der Erfindung kann vorgesehen sein, dass am Wärmetauschmodul ein Fußteil ausgebildet ist, welches den Grundkörper und einen Anschlussdeckel mit Anschlusselementen für einen Wärmetauschkreislauf umfasst, wobei durch Grundkörper und Anschlussdeckel zwei Kammern gebildet werden, in die je ein Anschlusselement mündet, wobei jedes bügelförmige Rohr mit einem Ende an eine Kammer und mit dem anderen Ende an die jeweils andere Kammer zur Bildung des Wärmetauschkreislaufs angeschlossen ist, insbesondere wobei die bügelförmigen Rohre, der Befestigungsbereich der Rohre im Grundkörper, die Kammern im Grundkörper und der Anschlussdeckel in axialer Richtung hintereinander angeordnet sind und/oder die bügelförmigen Rohre im Wärmetauschkreislauf parallelgeschaltet sind. Die Anschlusselemente sind vorteilhaft als Stutzen ausgebildet, an welche die Anschlussleitungen eines externen Flüssigkeits- oder Kühlmittelkreislaufs anschließbar sind.

Gemäß einer Ausgestaltung der Erfindung kann vorgesehen sein, dass die Distanzbleche Löcher aufweisen, durch welche die bügelförmigen Rohre gesteckt sind, dass das Lochmuster identisch ist zu dem Bohrmuster für die Bohrungen zur Aufnahme der Rohre in dem Grundkörper und dass der Außendurchmesser der Distanzbleche begrenzt ist durch den Durchmesser des Gewindes, insbesondere wobei die Distanzbleche formschlüssig, stoffschlüssig und/oder kraftschlüssig mit den bügelförmigen Rohren verbunden sind. Somit tragen alle Rohre durch ihre jeweilige Verbindung mit den Distanzblechen und somit mit den anderen Rohren und/oder einen Stab zur Stabilität des Rohrbündels bei.

Gemäß einer Ausgestaltung der Erfindung kann vorgesehen sein, dass am Grundkörper eine Schnittstelle ausgebildet ist zum formschlüssigen Verbinden mit einem Montagewerkzeug, insbesondere wobei die Schnittstelle die Kammern ganz oder teilweise radial umgibt oder begrenzt. Alternativ oder zusätzlich kann vorgesehen sein, dass an dem Grundkörper an der Außenseite ein Außensechskant als Schlüsselansatz ausgebildet ist, insbesondere wobei der Außensechskant und/oder die Kanten des Außensechskants den Anschlussdeckel radial überragt/überragen und/oder der Außensechskant zumindest einen Teilbereich der Kammern radial umschließt und/oder begrenzt. Von Vorteil ist dabei, dass eine einfache Montage des Wärmetauschmoduls mit herkömmlichem Werkzeug in wenigen Arbeitsschritten durchführbar ist. Insbesondere sind zusammengespannte Flansche wie bei der CH 519 692 A zur Halterung des Wärmetauschmoduls verzichtbar, und es ist lediglich die Betätigung einer einzigen Schraubverbindung zur Montage erforderlich.

Gemäß einer Ausgestaltung der Erfindung kann vorgesehen sein, dass an dem Grundkörper ein Stab befestigt ist, der durch jedes Distanzblech gesteckt ist, insbesondere wobei der Stab das Wärmetauschelement in Längsrichtung überragt und/oder vollständig im Inneren des von den bügelförmigen Rohren begrenzten Raumes angeordnet ist und/oder mit jedem Distanzblech formschlüssig, stoffschlüssig und/oder kraftschlüssig verbunden ist. Durch den Stab, der als Gewindestab in den Grundkörper eingeschraubt oder als massiver oder hohler Stab mit diesem verschweißt, verlötet oder dergleichen sein kann, ist die Stabilität des Rohrbündels gegenüber mechanischen Belastungen, insbesondere Biegebelastungen, nochmals gesteigert.

Gemäß einer Ausgestaltung der Erfindung kann vorgesehen sein, dass die Enden der bügelförmigen Rohre an einen vorzugsweise extermen Kühlkreislauf anschließbar sind. Somit ist eine effektive Kühlung des Ölsumpfes durchführbar.

Gemäß einer Ausgestaltung der Erfindung kann vorgesehen sein, dass wenigstens ein bügelförmiges Rohr im Inneren einen Heizdraht aufweist. Hierdurch ist beispielsweise das so genannte Festfrieren von Schmieröl an den gekühlten bügelförmigen Rohren, durch welches das Wärmetauschmodul seine Kühlleistung verliert, vermeidbar oder beseitigbar.

Gemäß einer Ausgestaltung der Erfindung kann vorgesehen sein, dass die Distanzbleche aus einem metallischen Werkstoff, insbesondere Blech, gefertigt sind. Als metallische Werkstoffe kommen vorzugsweise Kupfer, Stahl, Messing, Aluminium und deren Legierungen zum Einsatz. Somit ist eine ausreichende thermische und mechanische Stabilität, insbesondere eine Belastbarkeit bei Temperaturen von 100°C und mehr, erreichbar.

Gemäß einer Ausgestaltung der Erfindung kann vorgesehen sein, dass am Grundkörper einstückig ein Dichtungsansatz zur Abdichtung der Gehäuseöffnung ausgeformt ist. Hierzu weist der Grundkörper vorzugsweise im Anschluss an das Gewinde eine entsprechende Schulter und ein an dieser befestigtes oder angeordnetes Dichtmittel, wie einen Dichtring oder eine Dichtscheibe oder dergleichen, auf. Somit ist selbst bei Undichtigkeit des Kühlmittel-Anschlusses ein Eindringen von Wasser in den Ölsumpf verhindert, da der Kühlmittel-Anschluss außerhalb des durch das Dichtmittel verschlossenen Gehäuses angeordnet ist.

Gemäß einer Ausgestaltung der Erfindung kann vorgesehen sein, dass die bügelförmigen Rohre in dem Grundkörper in einem Befestigungsbereich durch Einrollen befestigt sind. Hierdurch ist eine preisgünstige Fertigung ermöglicht. Durch die beschriebene Verwendung der Distanzbleche wird eine ausreichende Stabilität des Rohrbündels erreicht, die ein Lösen eines einzelnen Rohrs verhindert.

Gemäß einer Ausgestaltung der Erfindung kann vorgesehen sein, dass jedes der bügelförmigen Rohre eine Ebene aufspannt und sich bei Rohren unterschiedlicher Länge die jeweiligen Ebenen kreuzend bzw. transversal schneiden, und bei Rohren gleicher Länge die jeweiligen Ebenen parallel zueinander angeordnet sind, insbesondere wobei wenigstens zwei Rohre eine gleiche Länge aufweisen und wenigstens zwei Rohre eine unterschiedliche Länge aufweisen. Hierdurch werden die gebogenen Abschnitte der Rohre über einen axialen Bereich gestreckt angeordnet, so dass pro Querschnittsfläche eine größere Rohranzahl unterbringbar ist. Somit ist das Baumaß des Wärmetauschmoduls besonders klein gestaltbar. Vorzugsweise weisen die kürzeren Rohre einen geringeren Abstand der beiden entlang einer Längsachse parallel geführten Rohre auf als die längeren, beschreibt also das bogenförmige Rohrstück am Ende bei den kürzeren Rohren näherungsweise einen Kreis mit kleinerem Durchmesser als bei den längeren

Zur Bereitstellung einer robusten Anschlussmöglichkeit für einen externen Kühlmittekreislauf kann vorgesehen sein, dass der Grundkörper einen zylindrischen Abschnitt aufweist, dessen Achse durch die Längsachse gegeben ist, dass der Grundkörper einen sechskantigen Schlüsselansatz-Abschnitt aufweist, der sich an den zylindrischen Abschnitt anschließt, dass sich an den Schlüsselansatz-Abschnitt ein vorzugsweise lösbar verbundener und/oder abnehmbarer Anschlussdeckel anschließt, der zwei parallel zu der Längsachse ausgerichtete Anschlussstutzen aufweist, die in den Anschlussdeckel eingeschraubt sind, und dass der Anschlussdeckel mit dem Grundkörper zwei Kammern umschließt, die jeweils mit einem Anschlussstutzen verbunden sind und wobei jedes bügelförmige Rohr mit je einem Ende in jede Kammer mündet. Das Wärmetauschmodul kann zusätzlich zu der beschriebenen Abfolge noch Übergangsbereiche aufweisen, die zwischen den Abschnitten angeordnet und ausgebildet sind. Vorzugsweise ist das Gewinde in dem zylindrischen Abschnitt ausgebildet. Der abnehmbare Deckel bietet den Vorteil, dass die Kammern und somit die Ein- und Ausgänge der Rohre zur Wartung oder dergleichen leicht zugänglich sind. Vorzugsweise ist der Anschlussdeckel mit dem Grundkörper verschraubt.

Gemäß einer Ausgestaltung der Erfindung kann vorgesehen sein, dass in einer weiteren Öffnung des Gehäuseteils ein weiteres, vorzugsweise identisches Wärmetauschmodul anordenbar ist.

Die Erfindung ist vorteilhaft einsetzbar zur Bildung einer Getriebebaureihe, bei der zur Bildung einer ersten Variante eines Getriebes in einer Öffnung eines Gehäuseteils eine Heizpatrone eingeschraubt ist, die elektrisch betreibbar ist, und zur Bildung einer zweiten Variante eines Getriebes in der Öffnung eine Kühlpatrone eingeschraubt ist, die an einen Kühlkreislauf anschließbar ist, insbesondere wobei die Kühlpatrone als Wärmetauschelement eines erfindungsgemäßen Getriebes ausgebildet ist.

Gemäß einer Ausgestaltung der Getriebebaureihe kann vorgesehen sein, dass Varianten mit Kühlpatronen unterschiedlicher Länge, die in Gehäusen mit gleichen Abmessungen angeordnet sind, umfasst sind und/oder zur Bildung einer dritten Variante in der Öffnung eine Kühlpatrone angeordnet ist und in einer weiteren Öffnung des Gehäuseteils eine weitere, insbesondere identischen, Kühlpatrone angeordnet ist und/oder zur Bildung einer vierten Variante in der Öffnung eine Kühlpatrone angeordnet ist und in einer weiteren Öffnung des Gehäuseteils eine elektrisch betriebene Heizpatrone angeordnet ist.

Wichtige Eigenschaften eines bei der Erfindung vorgesehene Wärmetauschmoduls sind, dass ein Grundkörper vorgesehen ist, die ein Gewinde aufweist zum Einschrauben in eine Gehäuseöffnung eines Getriebes und an der ein lang gestrecktes Wärmetauschelement befestigt ist, dessen räumliche Ausdehnung quer zu seiner Längsrichtung durch den Durchmesser des Gewindes begrenzt ist. Von Vorteil ist dabei, dass eine ein Wärmetauschmodul einfach montierbar ist. Insbesondere sind Flansche mit Bohrlöchern für Schrauben verzichtbar. Durch die Begrenzung der Ausdehnung quer zur Längsrichtung des Wärmetauschmoduls ist ein Einführen des Moduls durch die Öffnung vornehmbar. Somit ist eine nachträgliche Montage beispielsweise eine Kühlmoduls ermöglicht, wenn die Kühlleistung eines Getriebes ohne Kühlung für eine bestimmte Einsatzart nicht ausreicht.

Bei einer vorteilhaften Ausgestaltung umfasst das Wärmetauschelement mehrere bügelförmige Rohre, die mit beiden Enden in jeweils einer Bohrung in dem Grundkörper befestigt sind. Von Vorteil ist dabei, dass eine einfach fertigbare Ausführungsform bereitgestellt ist. Die Bügel weisen vorzugsweise einen lang gestreckten geraden Abschnitt und einen bogenförmigen Abschluss oder Umkehrabschnitt auf. Die Ausdehnung des sich quer zur Längsrichtung des Moduls erstreckenden bogenförmigen Abschnitts ist klein gegenüber der Erstreckung in Längsrichtung. Hierdurch ist ein Wärmetauschmodul bereitgestellt das durch eine relativ enge Öffnung einführbar ist, und das in den Ölsumpf des Getriebes weit hineinragt und dieses kühlt und/oder erwärmt. Vorzugsweise beträgt die Länge des hineinragenden Anteils mindestens das Fünffache oder sogar mindestens das Siebenfache des Durchmessers der Öffnung. Hierdurch wird ein großer Bereich des Ölsumpfs thermisch gut an das Wärmetauschmodul gekoppelt, und die Öffnung ist mit geringem Durchmesser ausführbar.

Bei einer vorteilhaften Ausgestaltung sind die bügelförmigen Rohre in dem Grundkörper durch Einrollen befestigt. Von Vorteil ist dabei, dass ein einfaches Herstellungsverfahren einsetzbar ist. Insbesondere ist das Wärmetauschmodul aus bügelförmigen Rohren und einem Grundkörper so aufgebaut, dass die eingesteckten bügelförmigen Rohre von außen zugänglich sind. Somit können die Rohre in ihren Endbereichen jeweils von innen aufgeweitet werden, wodurch ein Kraftschluss zwischen Rohr und Bohrungswand hergestellt ist. Eine stoffschlüssige Verbindungstechnik wie Schweißen oder Löten ist somit vermeidbar. Hierdurch sind die Herstellungskosten reduziert.

Bei einer vorteilhaften Ausgestaltung sind die bügelförmigen Rohre im Ölsumpf des Getriebes angeordnet. Von Vorteil ist dabei, dass zusätzliche Vorrichtungen wie Wärmetauschzylinder im Ölkreislauf verzichtbar sind.

Bei einer vorteilhaften Ausgestaltung spannt jedes bügelförmige Rohr eine Ebene auf, wobei sich mindestens zwei Ebenen transversal, also nicht-tangential, insbesondere unter einem von Null verschiedenen, vorzugsweise unter einem Winkel von wenigstens 30° der sogar wenigstens 75°, schneiden.

Allgemein beschreibt Transversalität mathematisch das Gegenteil von Tangentialität und stellt den Normalfall des mathematischen Schneidens dar, bei dem sich zwei Flächen, zwei Kurven oder eine Kurve und eine Fläche oder ganz allgemein zwei geometrische Objekte unter einem von Null verschiedenen Winkel schneiden, also sich schneiden, ohne sich in dem wenigstens einen Schnittpunkt aneinander zu schmiegen. Transversal zu einer vorgegebenen Richtung bedeutet somit beispielsweise quer dieser Richtung verlaufend.

Somit ist der in etwa zylinderförmige Raumbereich im Ölsumpf, der durch die Erfordernis einer Einschiebbarkeit des Moduls definiert ist, ausfüllbar durch rohrförmige Wärmetauschelemente, die einen vorteilhaft großen Abstand zueinander aufweisen. Insbesondere ist hierdurch ein Zusetzen der Zwischenräume zwischen den Rohren mit Öl niedriger Viskosität, wie es bei Kühlbetrieb auftritt, vermeidbar. Weiterer Vorteil des transversalen Durchdringens ist, dass die Ebenen, in denen die bügelförmigen Rohre einer seitwärtigen Deformation einen erhöhten Widerstand bieten, nicht parallel liegen. Somit ist das Modul widerstandsfähiger gegen allseitige seitliche Beanspruchung, beispielsweise durch ein Eigengewicht der Wärmetauschelemente und das einseitige Einspannung oder Befestigen am Grundkörper.

Bei einer vorteilhaften Ausgestaltung ist ein Fußteil ausgebildet, das den Grundkörper und einen Anschlussdeckel mit Anschlusselementen für einen Wärmetauschkreislauf umfasst, wobei durch Grundkörper und Anschlussdeckel zwei Kammern gebildet werden, in die je ein Anschlusselement mündet, wobei jedes bügelförmige Rohr mit einem Ende an eine Kammer und mit dem anderen Ende an die jeweils andere Kammer zur Bildung des Wärmetauschkreislaufs angeschlossen ist. Die Kammern sind vorzugsweise axial in Verlängerung des Wärmetauschelements und der Bohrungen für die bügelförmigen Rohre angeordnet. Somit sind eine größere Baulänge und eine höhere Stabilität erreicht.

Da mehrere Rohre jeweils in eine Kammer münden, wirkt jede Kammer für sich als ein Verteiler von dem einen jeweiligen Anschlusselement auf die vielen jeweils angebrachten Rohre.

Bei einer vorteilhaften Ausgestaltung sind die bügelförmigen Rohre, der Befestigungsbereich der Rohre im Grundkörper, die Kammern im Grundkörper und der Anschlussdeckel in axialer Richtung hintereinander angeordnet. Axial meint hierbei die Richtung der größten Ausdehnung des Wärmetauschmoduls, also die Richtung, entlang derer die geraden Abschnitte der bügelförmigen Rohre in etwa ausgerichtet sind. Die Anordnung hat den Vorteil, dass quer zur axialen Richtung ein kompaktes Baumaß für das Wärmetauschmodul erreicht ist, so dass das Wärmetauschmodul selbst bei beengten Platzverhältnissen an der Außenseite des Gehäuses in Umgebung der Öffnung in die Öffnung einschiebbar ist.

Bei einer vorteilhaften Ausgestaltung sind die Kammern in axialer Richtung derart verlängert, dass seitlich Platz ist für sich in radialer Richtung öffnende Anschlusselemente. Somit ist eine Führung der Anschlussleitungen des Wärmetauschkreislaufs parallel zur Gehäusewand ausführbar, und der Wärmetauschkreislauf ist geschützt vor unbeabsichtigter Beschädigung.

Bei einer vorteilhaften Ausgestaltung sind die bügelförmigen Rohre durch mindestens ein Distanzblech mit Löchern gesteckt, dessen Lochmuster identisch ist zu dem Bohrmuster in dem Grundkörper und dessen Außendurchmesser begrenzt ist durch den Durchmesser des Gewindes. Von Vorteil ist dabei, dass das Modul somit eine erhöhte Steifigkeit gegen Querbeanspruchung aufweist, und dass die Einhaltung eines konstanten Abstandes zwischen den Rohren sichergestellt ist. Insbesondere ist ein Mindestabstand zwischen den Rohren gewährleistet, so dass das Öl in den Zwischenräumen zirkulieren oder strömen kann. Vorzugsweise sind mehrere, identisch ausgebildete Distanzbleche in gleichen Abständen zueinander angeordnet, wodurch die Seitenstabilität weiter erhöht ist.

Bei einer vorteilhaften Ausgestaltung ist eine Schnittstelle an dem Grundkörper ausgebildet zum formschlüssigen Verbinden mit einem Montagewerkzeug. Von Vorteil ist dabei, dass weiter Verbindungsmittel wie Flansche mit Schrauben verzichtbar sind. Das Getriebegehäuse weist eine Öffnung auf, in die das Wärmetauschmodul einschraubbar ist. Die vorgesehene Schnittstelle ermöglicht das Ansetzen eines Montagewerkzeugs, um die zu Dichtung zwischen Modul und Gehäusewand nötige Anpresskraft aufzubringen. Somit ist das Wärmetauschmodul einfach unterhalb der Linie des Ölfüllstandes einsetzbar und ragt mithin in den Ölsumpf. Die Schnittstelle umgibt oder begrenzt die Kammern ganz oder teilweise radial. Somit ist vorteilhaft eine kompakte Bauform des Grundkörpers erreicht. Schnittstelle und übriger Grundkörper, insbesondere der Bereich mit Schraubgewinde und Dichtelementen, sind einstückig ausgeführt, so dass der gesamte Grundkörper mit hoher Anpresskraft in ein Schraubgewinde einer Öffnung im Getriebegehäuse einschraubbar ist und ein dichtender Abschluss der Öffnung nach außen erreichbar ist.

Bei einer vorteilhaften Ausgestaltung ist an dem Grundkörper an der Außenseite ein Außensechskant als Schlüsselansatz ausgebildet. Von Vorteil ist dabei, dass zur Montage ein Standardwerkzeug, ein Maulschlüssel, verwendbar ist. Der Außensechskant überragt radial die Abmessungen des Anschlussdeckels und stellt somit zusätzliches, verstärkendes Material der Grundplatte dar.

Bei einer vorteilhaften Ausgestaltung umschließt der Außensechskant zumindest einen Teilbereich der Kammern radial und/oder begrenzt diesen, wobei die Kanten des Außensechskants den Außensechskant radial überragen. Von Vorteil ist dabei, dass der Außensechskant zwei Funktionen vereint, zum einen die Ansatzmöglichkeit für ein Montagewerkzeug und zum anderen die Ausbildung eines stabilisierenden, ringförmigen Gehäuseteils am Grundkörper. Die überstehenden Kanten des Außensechskants bilden hierbei axial verlaufende Verdickungen des ringförmigen Gehäuseteils, die eine zusätzliche Verwindungssteifigkeit des Grundkörpers herstellen. Durch die Verlegung der Kammern in den vom Außensechskant umschlossenen Bereich wird vorteilhaft eine Verkürzung der Gesamtbaulänge des Wärmetauschmoduls erreicht. Der ringförmige Gehäuseteil bietet überdies Platz zur Aufnahme von längs zu seiner Wand axial verlaufenden Bohrlöchern für Befestigungsschrauben des Anschlussdeckels, insbesondere im Bereich der Verdickungen an seinen Kanten.

Bei einer vorteilhaften Ausgestaltung ist an dem Grundkörper ein Stab befestigt, der durch das Distanzblech gesteckt ist und der das Wärmetauschelement in Längsrichtung überragt. Von Vorteil ist dabei, dass das Wärmetauschelement stabilisiert ist gegen Querbeanspruchung und geschützt gegen Stoß in Längsrichtung. Somit ist ein Einführen des Wärmetauschmoduls sicher und fehlerfrei ausführbar. Der Stab ist vorteilhaft für die Befestigung von Distanzblechen verwendbar, wodurch die Steifigkeit nochmals erhöht ist.

Bei einer vorteilhaften Ausgestaltung sind die bügelförmigen Rohre im Wärmetauschkreislauf parallelgeschaltet. Von Vorteil ist dabei, dass das Wärmetauschmodul einen geringen Strömungswiderstand im Wärmetauschkreislauf aufweist, wodurch die Kreislaufpumpe entlastet ist.

Bei einer vorteilhaften Ausgestaltung weist ein bügelförmiges Rohr im Inneren einen Heizdraht auf. Von Vorteil ist dabei, dass das Modul als Kühlmodul und als Heizmodul betreibbar ist, wobei das Kühlen über ein strömendes Kühlmittel und das Heizen elektrisch erfolgt. Somit ist bei einem Getriebe, das in einer kalten Umgebung in Betrieb genommen werden soll, zunächst das Öl erwärmbar bis zum Erreichen einer Mindestviskosität und anschließend im Dauerbetrieb kühlbar.

Gemäß einer Ausgestaltung der Erfindung kann vorgesehen sein, dass das Wärmetauschelement eine Kühlpatrone ist.

Hier bei vorgesehen sein, dass ein Kühlelement aus entlang einer Längsachse parallel geführten Rohren gebildet ist, die an ihrem einen Ende jeweils paarweise durch ein bogenförmiges Rohrstück verbunden sind und an ihrem anderen Ende jeweils in eine Bohrung eines Grundkörpers eingesteckt sind, wobei bogenförmige Rohrstücke in Ebenen verlaufen, die sich zumindest teilweise paarweise kreuzen, und wobei der Grundkörper einen zylindrischen Abschnitt aufweist, dessen Achse durch die Längsachse gegeben ist, und wobei der Grundkörper einen sechskantigen Schlüsselansatz-Abschnitt aufweist, der sich an den zylindrischen Abschnitt anschließt und wobei sich an den zylindrischen Abschnitt ein Anschlussdeckel anschließt, der zwei parallel zu der Längsachse ausgerichtete Anschlussstutzen aufweist, die in den Anschlussdeckel eingeschraubt sind, und wobei der Anschlussdeckel mit dem Grundkörper zwei Kammern umschließt, die jeweils mit einem Anschlussstutzen verbunden sind und wobei mit jeder Kammer jeweils die Hälfte der Rohre verbunden ist, und wobei kreisförmige Distanzbleche vorgesehen ist, durch die jeweils alle Rohre gesteckt sind, und wobei ein Stab in dem Grundkörper befestigt ist, der durch alle Distanzbleche gesteckt ist und die Rohre in Richtung der Längsachse überragt. Hierdurch ist vorteilhaft ein erfindungsgemäßes Wärmetauschmodul bereitgestellt, mit dem ein Ölkreislauf eines Getriebes kühlbar ist. Die Kühlpatrone ist insbesondere durch ihre Merkmale so ausgebildet, dass sie in eine Öffnung des Getriebes nachträglich, d.h. nach der kompletten Montage, einschiebbar ist und in dieser Öffnung ohne zusätzliche Mittel durch Einschrauben dichtend befestigbar ist. Die Öffnung liegt vorzugsweise unterhalb der Linie des Ölfüllstandes im Getriebe. Hierdurch ist sichergestellt, dass die Kühlpatrone in den Ölsumpf hineinragt. Vorzugsweise erstreckt sich die Kühlpatrone unterhalb der Zahnräder über die Länge der Gehäusewanne, mindestens über einen Bereich von zwei oder mehr Stufen.

Die Erfindung ist vorteilhaft einsetzbar bei einem Getriebe, bei welchem in einem Gehäuseteil mindestens eine Öffnung vorgesehen ist, in die ein Wärmetauschmodul, insbesondere nach einem der vorangegangenen Ansprüche, von außen eingeführt und eingeschraubt ist. Somit ist vorteilhaft ein Getriebe mit einem Wärmetauschmodul, beispielsweise einer Kühlpatrone oder einem kombinierten Kühl- und Heizmodul, nachträglich ausrüstbar. Externe Ölleitungen vom Getriebekreislauf zu einem Wärmetauscher sind verzichtbar.

Wichtige Merkmale der Erfindung einer Getriebebaureihe sind in Anspruch 14 angegeben. Es kann vorgesehen sein, dass zur Bildung einer ersten Variante eines Getriebes in einer Öffnung eines Gehäuseteils eine Heizpatrone eingeschraubt ist, die elektrisch betreibbar ist, und zur Bildung einer zweiten Variante eines Getriebes in der Öffnung eine Kühlpatrone eingeschraubt ist, die an einen Kühlkreislauf anschließbar ist. Von Vorteil ist dabei, dass die Zahl der Öffnungen, die ein Grundkörper für die Gehäuse einer Getriebebaureihe zur Realisierung aller Varianten aufweisen muss, möglichst gering ist. Insbesondere ist die Öffnung für die Heizpatrone alternativ für eine Kühlpatrone nutzbar. Somit sind Fertigungsschritte einsparbar.

Bei einer vorteilhaften Ausgestaltung ist zur Bildung einer dritten Variante in der Öffnung eine Kühlpatrone angeordnet und in einer weiteren Öffnung des Gehäuseteils eine weitere Kühlpatrone. Bei einer vorteilhaften Ausgestaltung umfasst die Baureihe Varianten mit Kühlpatronen unterschiedlicher Länge. Somit ist die Kühlleistung in Schritten steigerbar.

Bei einer vorteilhaften Ausgestaltung ist zur Bildung einer dritten Variante in der Öffnung eine Kühlpatrone angeordnet und in einer weiteren Öffnung des Gehäuseteils eine elektrisch betriebene Heizpatrone. Somit ist vorteilhaft eine Variante mit Heizmodul und Kühlmodul bildbar. Eine solche Variante ist beispielsweise in Kühlhäusern einsetzbar, in denen beim Anlaufen das Öl erwärmt werden muss, im Dauerbetrieb dagegen gekühlt. Auch in Umgebungen mit großen Temperaturschwankungen ist eine solche Variante vorteilhaft einsetzbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Getriebe
- 2: Ölsumpf
- 3: Gehäuse
- 4: Fußteil
- 5: Wärmetauschelement
- 20: Öffnung
- 21: Öffnung
- 22: Kühlpatrone
- 23: Ölablassschraube
- 30: Grundkörper
- 31: Anschlussdeckel
- 32: Anschlussstutzen
- 33: Befestigungsbereich
- 34: Kammer
- 35: Kammer
- 36: Trennwand
- 37: Bohrung
- 38: Bohrung
- 39: Rohr
- 40: Rohrbogen
- 41: Rohr
- 42: Rohrbogen
- 43: Rohr
- 44: Rohrbogen
- 45: Distanzblech
- 46: Schlüsselansatz
- 47: Gewinde
- 48: Schraube
- 49: Stab

Die Erfindung wird nun anhand von Abbildungen näher erläutert:

Es zeigt:
- Figur 1 ein teilweise aufgeschnittenes Getriebe mit montiertem Wärmetauschmodul,
- Figur 2 eine weitere Ansicht des Getriebes aus Figur 1,
- Figur 3 ein erfindungsgemäßes Wärmetauschmodul,
- Figur 4 den Fußteil des Wärmetauschmoduls nach Figur 3,
- Figur 5 eine weitere Ansicht des Fußteils nach Figur 4.

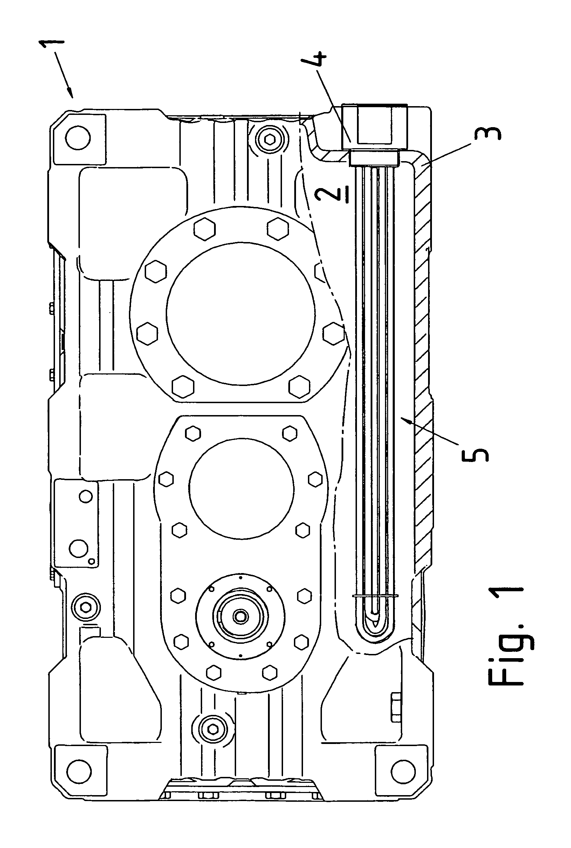

Figur 1 zeigt ein Getriebe 1 mit einem Gehäuse 3, das im unteren Bereich eine Wanne ausbildet, in der ein Ölsumpf 2 vorhanden ist. Eine Kühlpatrone umfasst ein Fußteil 4, das in eine Öffnung des Gehäuses eingeschraubt ist, und ein Wärmetauschelement 5 zum Kühlen des Ölsumpfes. Das Wärmetauschelement erstreckt sich unterhalb der Zahnräder über fast die gesamte Länge der Gehäusewanne, mindestens über einen Bereich von zwei Stufen.

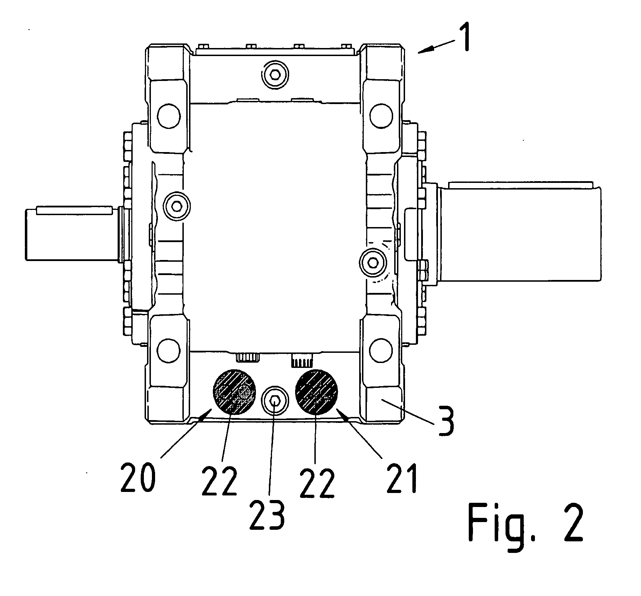

Figur 2 zeigt das Getriebe 1 mit einem Gehäuse 3, in dessen unteren Bereich eine Wanne mit einer ersten Öffnung 20 und einer zweiten Öffnung 21 ausgebildet ist. In die Öffnungen 20 und 21 ist jeweils eine Kühlpatrone 22 eingeschraubt. Alternativ ist in eine der Öffnungen eine Kühlpatrone 22 eingeschraubt und in die zweite eine Heizpatrone, beispielsweise eine elektrische Heizpatrone nach der Art eines Tauchsieders. Alternativ ist eine oder beide Öffnungen mit einem Verschlussdeckel verschlossen. Die Wanne des Gehäuses 3 ist weiter mit einer Ölablassschraube 23 versehen.

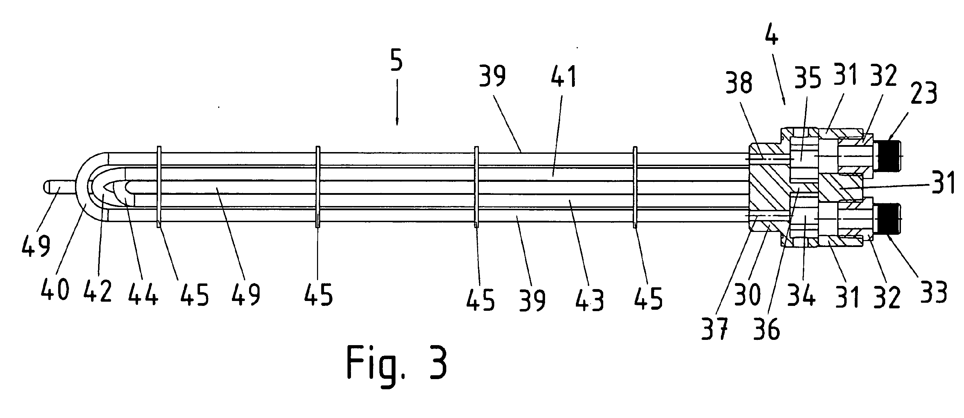

Figur 3 zeigt eine Schnittdarstellung einer Kühlpatrone. Die Kühlpatrone umfasst ein Fußteil 4 und ein Wärmetauschelement 5.

Das Fußteil 4 umfasst einen Grundkörper 30, in die Bohrungen 37 und 38 eingebracht sind. In diese Bohrungen 37 und 38 sind Rohre 39, 41 und 43 gesteckt, die sich in einer Längsrichtung parallel erstrecken und die an ihrem anderen Ende durch jeweils einen Rohrbogen 40, 42, 44 paarweise verbunden sind. Somit sind beispielsweise die Rohre 39 miteinander zu einem durchgängigen, bügelförmigen Rohr mit 180° Umlenkung verbunden. Die Rohrbögen 40 und 42 spannen jeweils eine Ebene auf, die sich entlang einer Linie schneiden, die in Längsrichtung verläuft. Der Rohrbogen 44 spannt eine Ebene auf, die sich zumindest mit der Ebene des Rohrbogens 42 entlang einer Linie schneidet, die in Längsrichtung verläuft.

Auf die Rohre 39, 41, 43 sind vier Distanzbleche 45 geschoben. Diese Distanzbleche 45 weisen zur Aufnahme der Rohre 39, 41, 43 Löcher auf, wobei das Lochmuster in jedem Distanzbleche 45 Identisch ist zu dem Bohrmuster der Bohrungen 37, 38 in dem Grundkörper 30. Somit ist sichergestellt, dass die Rohre 39, 41, 43 entlang der Längsrichtung untereinander einen konstanten Abstand aufweisen. Gleichzeitig ist durch die Distanzbleche 45 eine erhöhte Steifigkeit quer zur Längsrichtung erreicht.

Auf der von den Rohren 39, 41, 43 abgewandten Seite ist ein Anschlussdeckel 31 angeordnet. Der Anschlussdeckel 31 bildet mit dem Grundkörper 30 eine erste Kammer 34 und eine zweite Kammer 35 aus, die durch eine Trennwand 36 abgeteilt werden.

Die Rohre 39, 41 und 43 münden in Kammern 34 und 35. Dabei mündet jeweils ein Rohr in die erste Kammer 34 und das über den jeweiligen Rohrbogen verbundene andere Rohr in die zweite Kammer 35 Somit sind parallelgeschaltete Rohrschleifen in Form von bügelförmigen Rohren gebildet, beispielsweise durch die Rohre 39 und den Rohrbogen 40, welche in den Bohrungen 37, 38 befestigt sind und die erste Kammer 34 mit der zweiten Kammer 35 verbinden.

Die Bohrungen 37, 38 erfüllen eine Doppelfunktion. Zum einen verbinden sie die Rohre 39, 41, 43 mit den Kammern 34, 35 zur Durchleitung einer Flüssigkeit, zum anderen halten sie die Rohre 39, 41, 43.

In Bohrungen des Anschlussdeckels 31 sind Anschlussstutzen 32 eingeschraubt, die an ihrem äußeren Ende jeweils einen Befestigungsbereich 33 aufweisen zur Montage eines Flüssigkeitskreislaufs. In den Befestigungsbereichen 33 sind hierzu umlaufende Rillen ausgeformt, auf denen jeweils ein Schlauch des Flüssigkeitskreislaufs mittels Rohrschellen gehalten ist. Je ein Anschlussstutzen 32 mündet in eine Kammer 34, 35 zur Bildung eines Flüssigkeitskreislaufs.

Im Ausführungsbeispiel der Figur zeigen die Öffnungen der Anschlussstutzen in axiale Richtung. Bei weiteren Ausführungsbeispielen sind die Anschlussstutzen abgewinkelt oder seitlich angebracht, und die Öffnungen zeigen in eine radiale Richtung oder mehrere radiale Richtungen.

In einem alternativen Ausführungsbeispiel sind statt der einschraubbaren Anschlussstutzen 32 einsteckbare und/oder einrastbare Anschlussstutzen vorgesehen.

Allgemein ist die Kühlpatrone auch als Heizpatrone verwendbar, indem die Rohre des Wärmetauschelements von einer Flüssigkeit durchströmt werden, die eine höhere Temperatur als die Umgebung aufweist. Somit ist mit der Kühlpatrone ein Wärmetauschmodul bereitgestellt. In diesem Fall weist der Flüssigkeitskreislauf an einer weiteren Stelle eine Vorrichtung auf, durch welche die Flüssigkeit erwärmbar ist. Die Erwärmung ist elektrisch und/oder chemisch, beispielsweise in einem Durchlauferhitzer, bewirkbar.

Zur Fertigung einer Kühlpatrone werden zunächst bügelförmige Rohre bereitgestellt, auf die Distanzbleche geschoben werden. Somit ist ein Bündel bügelförmiger Rohre hergestellt.

Durch Aufweiten der bügelförmigen Rohre 40, 42, 44 von Innen nach Aufstecken der Distanzbleche 45 oder durch entsprechende Dimensionierung der entsprechenden Löcher in den Distanzblechen 45 werden die Distanzbleche 45 mit den bügelförmigen Rohren 40, 42, 44 kraftschlüssig verbunden, die Rohre 40, 42, 44 bilden somit eine gegen Verbiegungen robuste Einheit. Alternativ werden Rohre 40, 42, 44 und Distanzbleche 45 stoffschlüssig, beispielsweise durch Schweißen oder Löten, verbunden.

Vorzugsweise sind die Rohre 40, 42, 44 und die Distanzbleche 45 aus dem gleichen Werkstoff hergestellt, beispielsweise aus einem metallischen Werkstoff wie Stahl, Kupfer oder Messing oder aus metallischen Legierungen.

Anschließend wird das Bündel mit dem Grundkörper verbunden, indem die Rohrenden in jeweils eine Bohrung eingesteckt werden und indem die Rohrenden eingerollt werden, also vom offenen Ende her aufgeweitet werden zur Herstellung einer kraftschlüssigen Verbindung.

In einem weiteren Ausführungsbeispiel umfasst dass Wärmetauschelement ein Rohr mit mehreren Windungen, dessen Enden in den Grundkörper eingerollt sind.

In dem Grundkörper 30 der Figur 3 ist eine weitere Bohrung eingebracht, in die ein Stab 49 eingesteckt ist, wobei der Stab 49 die bügelförmigen Rohre des Wärmetauschelements 5 in axialer Richtung überragt. Somit ist ein zusätzlicher Schutz des Wärmetauschelements 5 geschaffen. Der Stab 49 ist vorzugsweise massiv ausgebildet und/oder stoffschlüssig mit den Distanzblechen 45 verbunden zur Erhöhung der seitlichen Steifigkeit des Wärmetauschelements 5.

Bei einem weiteren Ausführungsbeispiel überragt der Stab 49 in Figur 3 nicht die Rohre 40, 42, 44, sondern schließt mit dem am weitesten links in Figur 3 ersichtlichen Distanzblech 45 ab. Somit ist der Stab 49 vollständig in dem von den Rohren 40, 42, 44 begrenzten Raum angeordnet.

Der Stab 49 kann als Gewindestange ausgebildet sein und in den Grundkörper 30 einschraubbar sein.

Die Distanzbleche 45 sind mit dem Stab 49 stoffschlüssig verbunden, beispielsweise verschweißt oder verlötet, oder mit dem Stab 49 kraftschlüssig verbunden, beispielsweise durch Klemmen.

Bei Verwendung eines Stabes kann vorgesehen sein, dass die Distanzbleche 45 zuerst auf den am Grundkörper 30 befestigten Stab 49 befestigt werden und anschließend die Rohre 40, 42, 44 durch die Löcher in den Distanzblechen eingefädelt und mit dem Grundkörper verbunden werden.

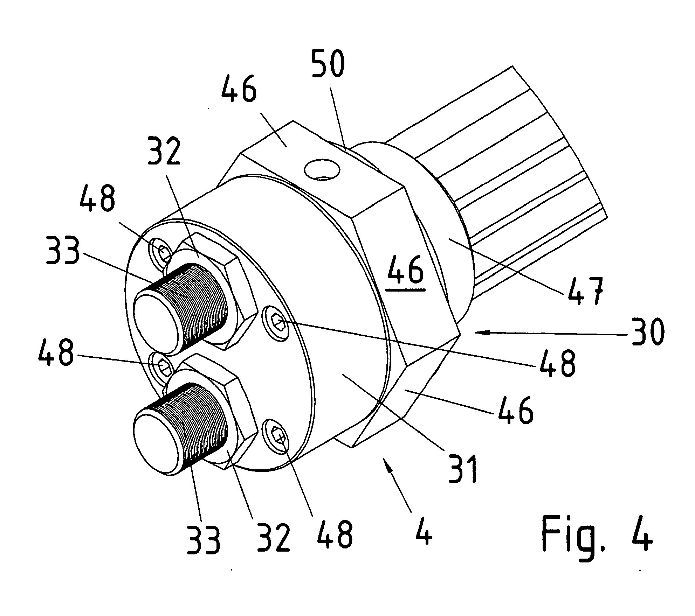

Figur 4 zeigt eine Detailansicht des Fußteils 4 der Kühlpatrone aus Figur 3. Der Grundkörper 30 weist ein Gewinde 47 auf, das in eine Öffnung eines Getriebegehäuses eingeschraubt wird.

Der Grundkörper 30 weist weiter einen Schlüsselansatz 46 in Form eines sechskantigen Prismas auf. Dieser Schlüsselansatz 46 dient zum Einschrauben der Kühlpatrone in die Öffnung des Getriebegehäuses.

Der Schlüsselansatz 46 überragt das Gewinde 47 radial. Im Grenzbereich zwischen Schlüsselansatz 46 und Gewinde 47 ist somit die Öffnung mit einem Dichtmittel 50, etwa einem Dichtring oder aufgebrachtem Kleber, abdichtbar.

Auf den Grundkörper 30 ist der Anschlussdeckel 31 aufgesetzt und mittels Schrauben 48 an dem Grundkörper 30 befestigt. Die Schrauben sind von der dem Grundkörper 30 abgewandten Seite des Anschlussdeckels 31 zugänglich. Sie sind in der Oberfläche der Seite versenkt zum Schutz vor Beschädigung.

In derselben Seite sind Bohrungen eingebracht, in die Anschlussstutzen 32 eingeschraubt sind. Diese Anschlussstutzen 32 weisen ebenfalls jeweils einen Schlüsselansatz auf. Die Anschlussstutzen 32 dienen als Anschlusselemente für einen externen Kühl- oder Heizkreislauf, in dem ein Kühl- oder Heizmittel zirkullert. Zur Befestigung der Anschlussleitungen sind Befestigungsbereiche 33 mit Rillen vorgesehen.

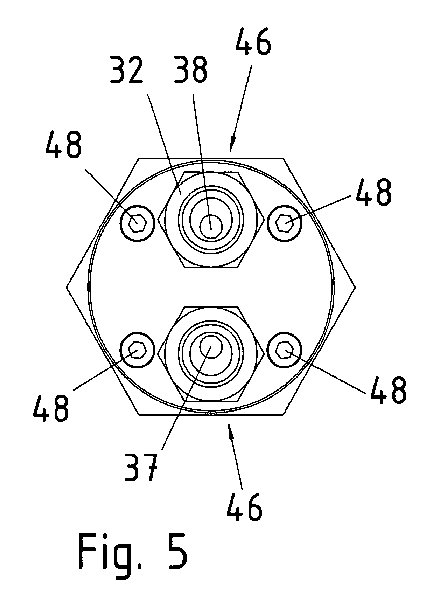

Figur 5 zeigt eine Draufsicht auf die dem Grundkörper 30 abgewandte Seite des Fußteils 4. Durch die Öffnungen der Anschlussstutzen 32 sind die Bohrungen 37 und 38 für die Rohre des Wärmetauschelements 5 sichtbar. Weitere derartige Bohrungen sind in dem Grundkörper vorgesehen für die weiteren Rohre 41, 43.

Die Bohrungen sind dabei jeweils paarweise mittig um den axialen Mittelpunkt dem Grundkörper 30 einander gegenüber angeordnet. Die Paare sind jeweils um einen Winkelbetrag versetzt, so dass sich die in den Bohrungen befestigten Schleifen gegenseitig durchdringen, wie in Figur 3 gezeigt.

Alternativ oder zusätzlich sind Paare von Bohrungen in zwei parallelen Reihen angebracht, so dass parallel zueinander liegende Schleifen von bügelförmigen Rohrabschnitten gebildet werden.

Bei einem alternativen Ausführungsbeispiel ist im Inneren eines der bügelförmigen Rohre, beispielsweise das Rohr 43 aus Figur 3, mit einem Heizdraht versehen. Die übrigen Rohre sind zum Kühlen vorgesehen, so dass eine kombinierbar einsetzbare Patrone bereitgestellt ist. Der Grundkörper 31 weist zusätzlich Anschlussstecker auf, über die der Heizdraht elektrisch anschließbar ist. Bei einer bevorzugten Ausführung wird während des Aufheizens das Kühlmittel in den Kühlrohren angehalten oder zumindest verlangsamt.

Bei weiteren Ausführungsbeispielen sind zusätzlich zu dem Rohr 44 weitere Rohre vorgesehen, welche die gleiche Länge wie das Rohr 44 aufweisen und seitlich parallel versetzt zu einer Seite oder zu beiden Seiten der durch das Rohr 44 beschriebenen Ebene angeordnet sind, wobei das Rohr 42 mit einem derartigen bogenförmigen Abschluss an seinem in den Ölsumpf ragenden Ende versehen ist, dass es das Rohr 44 und die zusätzlichen Rohre, vorzugsweise auf jeder Seite von Rohr 44 wenigstens ein zusätzliches Rohr oder Insgesamt mit Rohr 44 vier Rohre, wie das Rohr 42 in Figur 3 übergreift.

Bei weiteren Ausführungsbeispielen sind zusätzlich zu dem Rohr 42 weitere Rohre vorgesehen, die die gleiche Länge wie das Rohr 42 aufweisen und seitlich parallel versetzt zu einer Seite oder zu beiden Seiten der durch das Rohr 42 beschriebenen Ebene angeordnet sind, wobei das Wärmetauschmodul vorzugsweise auf jeder Seite von Rohr 42 wenigstens ein zusätzliches Rohr oder insgesamt mit Rohr 42 vier Rohre hat, und die das Rohr 44 und die zu diesem vorgesehenen zusätzlichen Rohre wie das Rohr 42 in Figur 3 übergreifen, und die von dem bogenförmigen Abschlussstück des Rohrs 40 analog zu Figur 3 übergriffen werden.

Bei weiteren Ausführungsbeispielen sind alle bügelförmigen Rohre parallel zueinander angeordnet und/oder weisen eine einheitliche Länge auf.

Bei den beschriebenen Ausführungsbeispielen weisen die Rohre 40, 42, 44 einen einheitlichen Durchmesser auf oder es weisen die in einer Reihe von zueinander parallel versetzten Rohren außen angeordneten Rohre einen größeren Durchmesser auf als die weiter innen, also näher bei der gedachten Mittelachse, gelegenen Rohre, wodurch eine erhöhte Stabilität erreicht wird.

Eine Kühlpatrone für ein Getriebe ist aus lang gestreckten Kühlrohren geformt, die von einer Seite eines Grundkörpers ausgehen. Zur Montage am Getriebe wird die Kühlpatrone durch eine Öffnung eines Getriebegehäuses gesteckt und es wird der Grundkörper in die Öffnung geschraubt.

## Patentansprüche

1. Getriebe (1) mit einem Wärmetauschmodul (5),
wobei das Wärmetauschmodul (5) mehrere Rohre (39, 41, 43) umfasst,
die in Gebrauchsstellung im Ölsumpf (2) des Getriebes (1) angeordnet sind,
und wobei jedes der mehreren Rohre (39, 41, 43) an beiden Enden durch das Gehäuse (3) des Getriebes (1) geführt und an einen Kühlkreislauf angeschlossen ist,
**dadurch gekennzeichnet, dass**
das Wärmetauschmodul (5) einen Grundkörper (30) aufweist,
dass der Grundkörper (30) ein Gewinde (47) aufweist zum Einschrauben in eine Gehäuseöffnung (20, 21) des Getriebes (1),
dass die Rohre (39, 41, 43) bügelförmig ausgebildet sind,
dass die Rohre (39, 41, 43) mit beiden Enden in jeweils einer Bohrung in dem Grundkörper (30) befestigt sind,
dass die räumliche Ausdehnung der Rohre (39, 41, 43) quer zu deren Längsrichtung durch den Durchmesser des Gewindes (47) begrenzt und das Wärmetauschmodul (5) durch die Gehäuseöffnung (20, 21) von außen einführbar ist,
dass wenigstens zwei bügelförmige Rohre (39, 41, 43) eine unterschiedliche Länge aufweisen,
wobei jedes der zwei bügelförmigen Rohre (39, 41, 43) eine Ebene aufspannt und sich die zwei Ebenen transversal, insbesondere unter einem von Null verschiedenen Winkel oder einem Winkel von wenigstens 5°, schneiden,
und dass
die bügelförmigen Rohre (39, 41, 43) durch mindestens ein Distanzblech (45) gesteckt sind.

2. Getriebe (1) nach einem der vorangegangenen Ansprüche,
**dadurch gekennzeichnet, dass**
die bügelförmigen Rohre (39, 41, 43) aus jeweils zwei entlang einer Längsachse parallel geführten Rohren (39, 41, 43) gebildet sind, die an ihrem einen Ende jeweils paarweise durch ein bogenförmiges Rohrstück (40, 42, 44) verbunden sind und/oder durch wenigstens zwei Distanzbleche (45) gesteckt sind,
insbesondere wobei je ein Distanzblech (45) in jeder Abschnittshälfte der entlang der Längsachse parallel geführten Rohre (39, 41, 43) angeordnet ist.

3. Getriebe (1) nach einem der vorangegangenen Ansprüche,
**dadurch gekennzeichnet, dass**
wenigstens zwei bügelförmige Rohre (39, 41, 43) eine gleiche Länge aufweisen,
wobei jedes der zwei bügelförmigen Rohre (39, 41, 43) eine Ebene aufspannt und die zwei Ebenen parallel zueinander angeordnet sind.

4. Getriebe (1) nach einem der vorangegangenen Ansprüche,
**dadurch gekennzeichnet, dass**
am Wärmetauschmodul (5) ein Fußteil (4) ausgebildet ist,
welches den Grundkörper (30) und einen Anschlussdeckel (31) mit Anschlusselementen (32) für einen Wärmetauschkreislauf umfasst,
wobei durch Grundkörper (30) und Anschlussdeckel (31) zwei Kammern (34, 35) gebildet werden,
in die je ein Anschlusselement (32) mündet,
wobei jedes bügelförmige Rohr (39, 41, 43) mit einem Ende an eine Kammer (34, 35) und mit dem anderen Ende an die jeweils andere Kammer (34, 35) zur Bildung des Wärmetauschkreislaufs angeschlossen ist,
insbesondere wobei die bügelförmigen Rohre (39, 41, 43), der Befestigungsbereich der Rohre (39, 41, 43) im Grundkörper (30), die Kammern (34, 35) im Grundkörper (30) und der Anschlussdeckel (31) in axialer Richtung hintereinander angeordnet sind und/oder die bügelförmigen Rohre (39, 41, 43) im Wärmetauschkreislauf parallelgeschaltet sind.

5. Getriebe (1) nach einem der vorangegangenen Ansprüche,
**dadurch gekennzeichnet, dass**
die Distanzbleche (45) Löcher aufweisen, durch welche die bügelförmigen Rohre (39, 41, 43) gesteckt sind,
dass das Lochmuster identisch ist zu dem Bohrmuster für die Bohrungen zur Aufnahme der Rohre (39, 41, 43) in dem Grundkörper (30)
und dass der Außendurchmesser der Distanzbleche (45) begrenzt ist durch den Durchmesser des Gewindes (47),
insbesondere wobei die Distanzbleche (45) formschlüssig, stoffschlüssig und/oder kraftschlüssig mit den bügelförmigen Rohren (39, 41, 43) verbunden sind.

6. Getriebe (1) nach einem der vorangegangenen Ansprüche,
**dadurch gekennzeichnet, dass**
am Grundkörper (30) eine Schnittstelle ausgebildet ist zum formschlüssigen Verbinden mit einem Montagewerkzeug,
insbesondere wobei die Schnittstelle die Kammern (34, 35) ganz oder teilweise radial umgibt oder begrenzt und/oder
an dem Grundkörper (30) an der Außenseite ein Außensechskant als Schlüsselansatz (46) ausgebildet ist, insbesondere wobei der Außensechskant und/oder die Kanten des Außensechskants den Anschlussdeckel (31) radial überragt/überragen und/oder der Außensechskant zumindest einen Teilbereich der Kammern (34, 35) radial umschließt und/oder begrenzt.

7. Getriebe (1) nach einem der vorangegangenen Ansprüche,
**dadurch gekennzeichnet, dass**
an dem Grundkörper (30) ein Stab (49) befestigt ist, der durch jedes Dislanzblech (45) gesteckt ist, insbesondere wobei der Stab (49) das Wärmetauschelement (5) in Längsrichtung überragt und/oder
vollständig im Inneren des von den bügelförmigen Rohren (39, 41, 43) begrenzten Raumes angeordnet ist
und/oder mit vorzugsweise jedem Distanzblech (45) formschlüssig, stoffschlüssig und/oder kraftschlüssig verbunden ist.

8. Getriebe (1) nach einem der vorangegangenen Ansprüche,
**dadurch gekennzeichnet, dass**
die Enden der bügelförmigen Rohre (39, 41, 43) an einen insbesondere externen Kühlkreislauf anschließbar sind.

9. Getriebe (1) nach einem der vorangegangenen Ansprüche,
**dadurch gekennzeichnet, dass**
wenigstens ein bügelförmiges Rohr (39, 41, 43) im Inneren einen Heizdraht aufweist und/oder
die Distanzbleche (45) aus einem metallischen Werkstoff, insbesondere Blech, gefertigt sind und/oder
das am Grundkörper (30) einstückig ein Dichtungsansatz zur Abdichtung der Gehäuseöffnung (20, 21) ausgeformt ist.

10. Getriebe (1) nach einem der vorangegangenen Ansprüche,
**dadurch gekennzeichnet, dass**
die bügelförmigen Rohre (39, 41, 43) in dem Grundkörper (30) in einem Befestigungsbereich durch Einrollen befestigt sind.

11. Getriebe (1) nach einem der vorangegangenen Ansprüche,
**dadurch gekennzeichnet, dass**
jedes der bügelförmigen Rohre (39, 41, 43) eine Ebene aufspannt,
wobei sich bei Rohren (39, 41, 43) unterschiedlicher Länge die jeweiligen Ebenen kreuzend schneiden
und bei Rohren (39, 41, 43) gleicher Länge die jeweiligen Ebenen parallel zueinander angeordnet sind,
insbesondere wobei wenigstens zwei Rohre (39, 41, 43) eine gleiche Länge aufweisen und wenigstens zwei Rohre (39, 41, 43) eine unterschiedliche Länge aufweisen.

12. Getriebe (1) nach einem der vorangegangenen Ansprüche,
**dadurch gekennzeichnet, dass**
der Grundkörper (30) einen zylindrischen Abschnitt aufweist, dessen Achse durch die Längsachse gegeben ist,
dass der Grundkörper (30) einen sechskantigen Schlüsselansatz-Abschnitt aufweist, der sich an den zylindrischen Abschnitt anschließt
und dass sich an den Schlüsselansatz-Abschnitt ein vorzugsweise lösbar verbundener Anschlussdeckel (31) anschließt,
der zwei parallel zu der Längsachse ausgerichtete Anschlussstutzen (32) aufweist,
die in den Anschlussdeckel (31) eingeschraubt sind,
und wobei der Anschlussdeckel (31) mit dem Grundkörper (30) zwei Kammern (34, 35) umschließt,
die jeweils mit einem Anschlussstutzen (32) verbunden sind und wobei jedes bügelförmige Rohr (39, 41, 43) mit je einem Ende in jede Kammer (34, 35) mündet,
insbesondere wobei das Gewinde (47) in dem zylindrischen Abschnitt ausgebildet ist.

13. Getriebe (1) nach einem der vorangegangenen Ansprüche,
**dadurch gekennzeichnet, dass**
in einer weiteren Öffnung (20, 21) des Gehäuseteils ein weiteres, vorzugsweise identisches Wärmetauschmodul (5) anordenbar ist.

14. Getriebebaureihe,
**dadurch gekennzeichnet, dass**
zur Bildung einer ersten Variante eines Getriebes (1) in einer Öffnung (20, 21) eines Gehäuseteils eine Heizpatrone eingeschraubt ist, die elektrisch betreibbar ist,
und dass zur Bildung einer zweiten Variante eines Getriebes (1) in der Öffnung (20, 21) eine Kühlpatrone (22) eingeschraubt ist, die an einen Kühlkreislauf anschließbar ist,
wobei die Kühlpatrone (22) als Wärmetauschelement (5) eines Getriebes (1) nach einem der vorangegangenen Ansprüche ausgebildet ist.

15. Getriebebaureihe nach mindestens einem der vorangegangenen Ansprüche,
**dadurch gekennzeichnet, dass**
Varianten mit Kühlpatronen (22) unterschiedlicher Länge, die in Gehäusen mit gleichen Abmessungen angeordnet sind, umfasst sind
und/oder
zur Bildung einer dritten Variante in der Öffnung (20, 21) eine Kühlpatrone (22) angeordnet ist und in einer weiteren Öffnung (20, 21) des Gehäuseteils eine weitere, insbesondere identische, Kühlpatrone (22) angeordnet ist
und/oder
zur Bildung einer vierten Variante in der Öffnung (20, 21) eine Kühlpatrone (22) angeordnet ist und in einer weiteren Öffnung (20, 21) des Gehäuseteils eine elektrisch betriebene Heizpatrone angeordnet ist.

## Claims

1. A transmission (1) with a heat-exchange module (5),
the heat-exchange module (5) comprising a plurality of tubes (39, 41, 43),
which in the use position are arranged in the oil sump (2) of the transmission (1),
and each of the plurality of tubes (39, 41, 43) at both ends being guided through the housing (3) of the transmission (1) and being connected to a cooling circuit,
**characterised in that**
the heat-exchange module (5) has a base body (30),
**in that** the base body (30) has a thread (47) for screwing into a housing opening (20, 21) of the transmission (1),
**in that** the tubes (39, 41, 43) are stirrup-shaped,
**in that** the tubes (39, 41, 43) are fastened with both ends in one bore in each case in the base body (30),
**in that** the spatial extent of the tubes (39, 41, 43) transversely to the longitudinal direction thereof is limited by the diameter of the thread (47), and the heat-exchange module (5) can be introduced through the housing opening (20, 21) from the outside,
**in that** at least two stirrup-shaped tubes (39, 41, 43) have a different length,
each of the two stirrup-shaped tubes (39, 41, 43) spanning one plane and the two planes intersecting transversely, in particular at an angle other than zero or an angle of at least 5°,
and **in that**
the stirrup-shaped tubes (39, 41, 43) are inserted through at least one spacer plate (45).

2. A transmission (1) according to one of the preceding claims,
**characterised in that**
the stirrup-shaped tubes (39, 41, 43) are formed from in each case two tubes (39, 41, 43) which are guided in parallel along a longitudinal axis, which tubes at their one end are connected in each case in pairs by an arcuate tube piece (40, 42, 44) and/or
are inserted through at least two spacer plates (45),
in particular one spacer plate (45) in each case being arranged in each section half of the tubes (39, 41, 43) which are guided in parallel along the longitudinal axis.

3. A transmission (1) according to one of the preceding claims,
**characterised in that**
at least two stirrup-shaped tubes (39, 41, 43) have the same length,
each of the two stirrup-shaped tubes (39, 41, 43) spanning one plane and the two planes being arranged parallel to each other.

4. A transmission (1) according to one of the preceding claims,
**characterised in that**
a foot part (4) is formed on the heat-exchange module (5),
which part comprises the base body (30) and a connection cover (31) with connection elements (32) for a heat-exchange circuit,
with two chambers (34, 35) being formed by the base body (30) and connection cover (31),
into which one connection element (32) in each case opens,
each stirrup-shaped tube (39. 41, 43) being connected by one end to a chamber (34, 35) and by the other end to the respective other chamber (34, 35) for the formation of the heat-exchange circuit,
in particular the stirrup-shaped tubes (39, 41, 43), the fastening region of the tubes (39, 41, 43) in the base body (30). the chambers (34, 35) in the base body (30) and the connection cover (31) being arranged one behind another in the axial direction and/or the stirrup-shaped tubes (39, 41, 43) being connected in parallel in the heat-exchange circuit.

5. A transmission (1) according to one of the preceding claims,
**characterised in that**
the spacer plates (45) have holes through which the stirrup-shaped tubes (39, 41, 43) are inserted,
**in that** the hole pattern is identical to the drilled pattern for the bores for receiving the tubes (39, 41, 43) in the base body (30)
and **in that** the external diameter of the spacer plates (45) is limited by the diameter of the thread (47),
in particular the spacer plates (45) being connected to the stirrup-shaped tubes (39, 41, 43) in a positive lock, a material lock and/or a non-positive lock.

6. A transmission (1) according to one of the preceding claims,
**characterised in that**
an interface is formed on the base body (30) for positive connection with an assembly tool,
in particular the interface entirely or partially radially surrounding or limiting the chambers (34, 35) and/or
an external hexagon as spanner attachment (46) being formed on the base body (30) on the outside, in particular the external hexagon and/or the edges of the external hexagon radially projecting over the connection cover (31)
and/or the external hexagon radially encompassing and/or limiting at least a partial region of the chambers (34, 35).

7. A transmission (1) according to one of the preceding claims,
**characterised in that**
a rod (49) is fastened to the base body (30), which rod is inserted through each spacer plate (45), in particular the rod (49) projecting over the heat-exchange element (5) in the longitudinal direction and/or
being arranged completely in the interior of the space limited by the stirrup-shaped tubes (39, 41, 43)
and/or being connected to preferably each spacer plate (45) in a positive lock, a material lock and/or a non-positive lock.

8. A transmission (1) according to one of the preceding claims,
**characterised in that**
the ends of the stirrup-shaped tubes (39, 41, 43) can be connected to an in particular external cooling circuit.

9. A transmission (1) according to one of the preceding claims,
**characterised in that**
at least one stirrup-shaped tube (39, 41, 43) has in its interior a heating wire and/or
the spacer plates (45) are made from a metallic material, in particular metal sheet, and/or
**in that** a sealing attachment for sealing off the housing opening (20, 21) is formed in one piece on the base body (30).

10. A transmission (1) according to one of the preceding claims,
**characterised in that**
the stirrup-shaped tubes (39, 41, 43) in the base body (30) are fastened in a fastening region by rolling-round.

11. A transmission (1) according to one of the preceding claims,
**characterised in that**
each of the stirrup-shaped tubes (39, 41, 43) spans a plane,
with, in the case of tubes (39, 41, 43) of different length, the respective planes intersecting each other crossing
and, in the case of tubes (39, 41, 43) of the same length, the respective planes being arranged parallel to each other,
in particular at least two tubes (39, 41, 43) having the same length and at least two tubes (39, 41, 43) having a different length.

12. A transmission (1) according to one of the preceding claims,
**characterised in that**
the base body (30) has a cylindrical section, the axis of which is formed by the longitudinal axis,
**in that** the base body (30) has a six-sided spanner attachment section which adjoins the cylindrical section
and **in that** a preferably detachably connected connection cover (31) adjoins the spanner attachment section,
which cover has two connecting branches (32) oriented parallel to the longitudinal axis, which are screwed into the connection cover (31),
and the connection cover (31) with the base body (30) encompassing two chambers (34, 35),
which are each connected to a connecting branch (32), and each stirrup-shaped tube (39, 41, 43) opening with one end in each case into each chamber (34, 35),
in particular the thread (47) being formed in the cylindrical section.

13. A transmission (1) according to one of the preceding claims,
**characterised in that**
a further, preferably identical, heat-exchange module (5) can be arranged in a further opening (20, 21) in the housing part.

14. A transmission series,
**characterised in that**
for the formation of a first variant of a transmission (1) a heating cartridge which can be electrically operated is screwed in an opening (20, 21) in a housing part,
and **in that** for the formation of a second variant of a transmission (1) a cooling cartridge (22) is screwed in the opening (20, 21), which cartridge can be connected to a cooling circuit,
the cooling cartridge (22) being formed as a heat-exchange element (5) of a transmission (1) according to one of the preceding claims.

15. A transmission series according to at least one of the preceding claims,
**characterised in that**
variants with cooling cartridges (22) of different length, which are arranged in housings with identical dimensions, are comprised
and/or
for the formation of a third variant a cooling cartridge (22) is arranged in the opening (20, 21) and a further, in particular identical, cooling cartridge (22) is arranged in a further opening (20, 21) in the housing part
and/or
for the formation of a fourth variant a cooling cartridge (22) is arranged in the opening (20, 21) and an electrically operated heating cartridge is arranged in a further opening (20, 21) in the housing part.

## Revendications

1. Transmission (1) équipée d'un module (5) d'échange thermique,
ledit module (5) d'échange thermique comprenant plusieurs tubulures (39, 41, 43) qui sont disposées dans la cuvette d'huile (2) de ladite transmission (1), en position d'utilisation,
et chacune des multiples tubulures (39, 41, 43) traversant le carter (3) de la transmission (1), aux deux extrémités, et étant raccordée à un circuit de refroidissement,
**caractérisée par le fait que**
le module (5) d'échange thermique est pourvu d'un corps de base (30) ;
que ledit corps de base (30) présente un filetage (47) conçu pour être vissé dans un orifice (20, 21) du carter de la transmission (1) ;
que les tubulures (39, 41, 43) sont réalisées avec forme cintrée ;
que lesdites tubulures (39, 41, 43) sont fixées, par les deux extrémités, dans un alésage respectif pratiqué dans ledit corps de base (30) ;
que l'étendue desdites tubulures (39, 41, 43) dans l'espace, transversalement par rapport à la direction longitudinale de ces dernières, est limitée par le diamètre du filetage (47), et ledit module (5) d'échange thermique peut être inséré, de l'extérieur, en traversant ledit orifice (20, 21) du carter ;
qu'au moins deux tubulures (39, 41, 43), de forme cintrée, présentent des longueurs différentes,
chacune des deux tubulures (39, 41, 43), de forme cintrée, couvrant l'étendue d'un plan et les deux plans se croisant transversalement, en particulier selon un angle différant de zéro ou un angle d'au moins 5° ;
et que
lesdites tubulures (39, 41, 43), de forme cintrée, sont emboîtées à travers au moins une tôle d'espacement (45).

2. Transmission (1) selon la revendication précédente,
**caractérisée par le fait que**
les tubulures (39, 41, 43), de forme cintrée, sont respectivement constituées de deux tubulures (39, 41, 43) dont les tracés sont parallèles le long d'un axe longitudinal et qui sont respectivement reliées par paires, à l'une de leurs extrémités, par l'intermédiaire d'une pièce tubulaire (40, 42, 44) en forme d'arceau, et/ou
sont emboîtées à travers au moins deux tôles d'espacement (45),
sachant notamment qu'une tôle respective d'espacement (45) est disposée dans chaque moitié d'un segment desdites tubulures (39, 41, 43) dont les tracés sont parallèles le long dudit axe longitudinal.

3. Transmission (1) selon l'une des revendications précédentes,
**caractérisée par le fait**
**qu'**au moins deux tubulures (39, 41, 43), de forme cintrée, présentent une même longueur, chacune des deux tubulures (39, 41, 43), de forme cintrée, couvrant l'étendue d'un plan et les deux plans étant disposés parallèlement l'un à l'autre.

4. Transmission (1) selon l'une des revendications précédentes,
**caractérisée par**
la présence, sur le module (5) d'échange thermique, d'une partie d'embase (4) qui englobe le corps de base (30) et un couvercle de raccordement (31) doté d'éléments de raccordement (32) affectés à un circuit d'échange de chaleur,
ledit corps de base (30) et ledit couvercle de raccordement (31) formant deux chambres (34, 35)
dans lesquelles débouche un élément respectif de raccordement (32),
chaque tubulure (39, 41, 43), de forme cintrée, étant raccordée à une chambre (34, 35) par une extrémité, et à l'autre chambre respective (34, 35), par l'autre extrémité, en vue d'instaurer ledit circuit d'échange de chaleur,
sachant notamment que lesdites tubulures (39, 41, 43) de forme cintrée, la zone de fixation desdites tubulures (39, 41, 43) dans le corps de base (30), les chambres (34, 35) situées dans ledit corps de base (30), et ledit couvercle de raccordement (31), sont agencés en succession dans le sens axial,
et/ou que lesdites tubulures (39, 41, 43), de forme cintrée, sont branchées en parallèle dans ledit circuit d'échange de chaleur.

5. Transmission (1) selon l'une des revendications précédentes,
**caractérisée par le fait que**
les tôles d'espacement (45) présentent des trous à travers lesquels les tubulures (39, 41, 43), de forme cintrée, sont emboîtées ;
que la configuration desdits trous est identique à la configuration dévolue aux alésages destinés à recevoir lesdites tubulures (39, 41, 43) dans le corps de base (30) ;
et que le diamètre extérieur des tôles d'espacement (45) est limité par le diamètre du filetage (47),
sachant notamment que lesdites tôles d'espacement (45) sont reliées par conformation, par solidarisation matérielle et/ou mécaniquement auxdites tubulures (39, 41, 43) de forme cintrée.

6. Transmission (1) selon l'une des revendications précédentes,
**caractérisée par le fait**
**qu'**une zone d'interface est ménagée sur le corps de base (30) en vue de la liaison, par conformation, avec un outil de montage,
sachant notamment que ladite zone d'interface entoure ou délimite totalement ou partiellement les chambres (34, 35), dans le sens radial, et/ou
**qu'**un profil à six pans en relief est façonné à la face extérieure dudit corps de base (30), en tant que protubérance (46) d'engagement d'une clé, sachant notamment que ledit profil à six pans en relief, et/ou les arêtes dudit profil à six pans en relief, fait/font saillie radialement au-delà du couvercle de raccordement (31),
et/ou que ledit profil à six pans en relief entoure et/ou délimite, dans le sens radial, au moins une région partielle desdites chambres (34, 35).

7. Transmission (1) selon l'une des revendications précédentes,
**caractérisée par le fait**
**qu'**une tige (49), fixée au corps de base (30), est emboîtée à travers chaque tôle d'espacement (45), sachant notamment que ladite tige (49) dépasse au-delà de l'élément (5) d'échange thermique, dans la direction longitudinale, et/ou
est intégralement logée à l'intérieur de l'espace délimité par les tubulures (39, 41, 43) de forme cintrée,
et/ou est, de préférence, reliée à chaque tôle d'espacement (45) par conformation, par solidarisation matérielle et/ou mécaniquement.

8. Transmission (1) selon l'une des revendications précédentes,
**caractérisée par le fait que**
les extrémités des tubulures (39, 41, 43) de forme cintrée peuvent être raccordées à un circuit de refroidissement, notamment extérieur.

9. Transmission (1) selon l'une des revendications précédentes,
**caractérisée par le fait**
**qu'**au moins une tubulure (39, 41, 43), de forme cintrée, est intérieurement munie d'un fil métallique chauffant ;
et/ou
**que** les tôles d'espacement (45) sont fabriquées en un matériau métallique, notamment de la tôle ;
et/ou
**qu'**un appendice d'étanchement est façonné d'un seul tenant avec le corps de base (30), en vue d'assurer l'étanchéité de l'orifice (20, 21) du carter.

10. Transmission (1) selon l'une des revendications précédentes,
**caractérisée par le fait que**
les tubulures (39, 41, 43), de forme cintrée, sont fixées dans le corps de base (30) en une zone de fixation, par roulage d'intégration.

11. Transmission (1) selon l'une des revendications précédentes,
**caractérisée par le fait que**
chacune des tubulures (39, 41, 43), de forme cintrée, couvre l'étendue d'un plan,
les plans respectifs s'entrecroisant en présence de tubulures (39, 41, 43) de longueurs différentes
et lesdits plans respectifs étant mutuellement parallèles en présence de tubulures (39, 41, 43) de longueur identique,
sachant notamment qu'au moins deux tubulures (39, 41, 43) présentent une longueur identique
et qu'au moins deux tubulures (39, 41, 43) présentent des longueurs différentes.

12. Transmission (1) selon l'une des revendications précédentes,
**caractérisée par le fait que**
le corps de base (30) offre une région cylindrique dont l'axe est défini par l'axe longitudinal ;
que ledit corps de base (30) comporte une zone hexagonale d'engagement d'une clé, qui se rattache à ladite région cylindrique ;
et qu'un couvercle de raccordement (31), de préférence relié de manière libérable et se rattachant à ladite zone d'engagement d'une clé,
comprend deux embouts de raccordement (32) orientés parallèlement audit axe longitudinal
et vissés dans ledit couvercle de raccordement (31),
sachant que ledit couvercle de raccordement (31) circonscrit, avec ledit corps de base (30), deux chambres (34, 35)
qui sont respectivement reliées à un embout de raccordement (32), chaque tubulure (39, 41, 43), de forme cintrée, débouchant dans chaque chambre (34, 35) par une extrémité respective,
et sachant notamment que le filetage (47) est pratiqué dans ladite région cylindrique.

13. Transmission (1) selon l'une des revendications précédentes,
**caractérisée par le fait**
**qu'**un autre module (5) d'échange thermique, de préférence identique, peut être logé dans un autre orifice (20, 21) de la partie formant carter.

14. Gamme structurelle de transmission
**caractérisée par le fait que**,
pour former une première variante d'une transmission (1), une cartouche chauffante, actionnable électriquement, est vissée dans un orifice (20, 21) d'une partie formant carter ;
et que, pour former une deuxième variante d'une transmission (1), une cartouche réfrigérante (22), pouvant être raccordée à un circuit de refroidissement, est vissée dans ledit orifice (20, 21),
ladite cartouche réfrigérante (22) étant réalisée sous la forme d'un élément (5) d'échange thermique d'une transmission (1) conforme à l'une des revendications précédentes.

15. Gamme structurelle de transmission selon au moins la revendication précédente,
**caractérisée par le fait**
**qu'**elle englobe des variantes équipées de cartouches réfrigérantes (22) de longueurs différentes, logées dans des carters de dimensionnements identiques ;
et/ou
**que**, pour former une troisième variante, une cartouche réfrigérante (22) est logée dans l'orifice (20, 21) et une autre cartouche réfrigérante (22), notamment identique, est logée dans un autre orifice (20, 21) de la partie formant carter ;
et/ou
**que**, pour former une quatrième variante, une cartouche réfrigérante (22) est logée dans ledit orifice (20, 21) et une cartouche chauffante, actionnée électriquement, est logée dans un autre orifice (20, 21) de ladite partie formant carter.
